# EUROPEAN PATENT APPLICATION

(11) **EP 4 647 992 A1**
(43) Date of publication of application: **12.11.2025**
(21) Application number: 24195083.1
(22) Date of filing: 19.08.2024
(51) Int. Cl.: G06Q 20/32, G06Q 20/40

(54) **CARD PAYMENT SYSTEM AND METHOD HAVING FUNCTION OF IDENTIFYING LOCATION OF USE OF CARD REGISTERED IN DEDICATED APPLICATION AND LOCATION OF DEDICATED APPLICATION**

(30) Priority: 10.05.2024 KR 20240062216
(71) Applicant: Park, Hee Young, Seoul 04731 (KR)
(72) Inventor: Park, Hee Young, Seoul 04731 (KR)
(74) Representative: BCKIP Part mbB

(57) **Abstract**

Proposed are a card payment blocking system and method using a card location identification function of a dedicated application. More particularly, provided is a payment method, in which when a user makes payment by a card registered in a dedicated application using a card location identification function of the dedicated application, payment is approved if location information of a terminal on which the dedicated application is installed and location information of an affiliated store POS device or an online affiliated store at which the card is used exist inside a set identification area, or payment is blocked if the two pieces of information exist outside the set identification area.

## Description

### CROSS REFERENCE TO RELATED APPLICATION

The present application claims priority to Korean Patent Application No. 10-2024-0062216, filed May 10, 2024.

### BACKGROUND OF THE INVENTION

### Field of the Invention

The present disclosure relates to a card payment system and method having a function of identifying a location of use of a card registered in a dedicated application and a location of the dedicated application. More particularly, the present disclosure relates to a payment method, in which when a user makes payment by a card registered in a dedicated application using a card location identification function of the dedicated application, payment is approved if location information of a terminal on which the dedicated application is installed and location information of an affiliated store POS device or an online affiliated store at which the card is used exist inside a set identification area, or payment is blocked if the two pieces of information exist outside the set identification area.

### Description of the Related Art

Card users who purchase goods or services all over the world use credit cards to pay purchase prices. However, a credit card that a user has lost or that has been stolen may be used by someone for payment. Alternatively, credit card information including a serial number, expiration date, and CVC number of a credit card may be stolen by someone to make online payment, which is illegal use of a credit card. The total amount of such credit card fraud occurring all over the world is enormous. In the related art for solving security problems of a credit card or information for payment on the basis of the location of the card, there is Korean Patent No. 10-1635386, titled "CARD PAYMENT BLOCKING METHOD AND SYSTEM BASED ON SPATIAL LOCATION". The current location is computed using a power difference between transmission and reception of signals transmitted from a plurality of adjacent wireless access point devices, and payment is approved or rejected according to the computed current location, so that card payment is blocked and security is strengthened. However, in the related art, the wireless access point devices need to be installed at several places and continuously managed, and there is inconvenience in a process in which a payment terminal computes its location in real time or at preset intervals.

The foregoing is intended merely to aid in the understanding of the background of the present disclosure, and is not intended to mean that the present disclosure falls within the purview of the related art that is already known to those skilled in the art.

### Document of Related Art

(Patent Document 1) Korean Patent No. 10-1635386 (registration date: 27 June 2016), titled "CARD PAYMENT BLOCKING METHOD AND SYSTEM BASED ON SPATIAL LOCATION"

### SUMMARY OF THE INVENTION

The present disclosure is directed to providing a card payment system and method having a function of identifying a location of use of a card registered in a dedicated application and a location of the dedicated application, in which a user simply activates the card location identification function through the dedicated application installed on his or her terminal and a structure capable of location identification is thus created for a credit card having no location identification function, which is not a smartphone or a device capable of recognizing location by GPS, so that an online or offline location of use of a card is recognized, card security is strengthened, and illegal use of a card that a user has lost or that has been stolen and payment information of a user online is fundamentally blocked.

According to an aspect of the present disclosure, this object of the present disclosure can be achieved by a card payment system having a function of identifying a location of use of a card registered in a dedicated application and a location of the dedicated application according to the present disclosure includes: a user terminal 1, an affiliated store point of sales (POS) device 2a, an online affiliated store 2b, a central server 3, a POS server 4a, an online affiliated store server 4b, a bank/card company server 5, and a dedicated application 30. The user terminal 1 is configured to purchase an object and a service online or offline by a card. The affiliated store POS device 2a is configured to sell the object and the service offline, and forward location information of the affiliated store POS device and a card payment approval request. The online affiliated store 2b is configured to sell the object and the service online through an application and a webpage, and transmit IP address information of the online affiliated store and the card payment approval request. The central server 3 is configured to forward a card payment-related request and approval, and perform identification area recognition 31 for the location information forwarded from the affiliated store POS device or the online affiliated store in which payment is executed by the card, and for location information of the user terminal in which the dedicated application is installed. The POS server 4a is configured to transmit the location information of the POS device and a card payment request to the bank/card company server or the central server. The online affiliated store server 4b is configured to forward the IP address information of the online affiliated store and the card payment request to the bank/card company server or the central server. The bank/card company server 5 is configured to determine whether to approve the card payment approval request from the POS server or the online affiliated store server, and notify the POS server of a response. The dedicated application 30 is configured to provide a card location identification function through the user terminal.

According to an aspect of the present disclosure, this object of the present disclosure can be achieved by an offline card payment method having a function of identifying a location of use of a card registered in a dedicated application and a location of the dedicated application that is linked to and is in partnership with a bank/card company includes: transmitting a card payment approval request from an affiliated store POS device to a POS server when payment is executed using the card for which a card location identification function is activated; forwarding the card payment approval request from the POS server to the bank/card company server and simultaneously, transmitting information of the card, transaction details, and location information of the affiliated store POS device to the bank/card company server; transmitting the location information of the affiliated store POS device to a central server after the bank/card company server recognizes a payment request; and performing, by the central server, identification area recognition for the location information of the POS device and location information of a user terminal to determine whether to approve payment in step.

According to an aspect of the present disclosure, this object of the present disclosure can be achieved by an online card payment method in which an online affiliated store having a function of identifying a location of use of a card registered in a dedicated application and a location of the dedicated application selects the dedicated application as a payment means for payment includes: attempting to execute payment at the online affiliated store by selecting, as the payment means, the dedicated application in which the card for a card location identification function is activated is registered; logging into the dedicated application and transmitting IP address information and a payment request from an online affiliated store server to a central server; and recognizing and analyzing, through identification area recognition by the central server, location information of a user terminal and location information of a place where online payment is requested in step.

The card payment system and method having the function of identifying a location of use of a card registered in a dedicated application and a location of the dedicated application according to the present disclosure have the following effects. First, a user simply activates the card location identification function through the dedicated application installed on his or her terminal and a structure capable of location identification is thus created for a credit card having no location identification function, which is not a smartphone or a device capable of recognizing location by GPS, so that online or offline card security can be easily strengthened with little effort. Second, illegal use of a card that a user has lost or that has been stolen and payment information of a user online can be fundamentally blocked.

### BRIEF DESCRIPTION OF THE DRAWINGS

The above and other objectives, features, and other advantages of the present disclosure will be more clearly understood from the following detailed description when taken in conjunction with the accompanying drawings, in which:

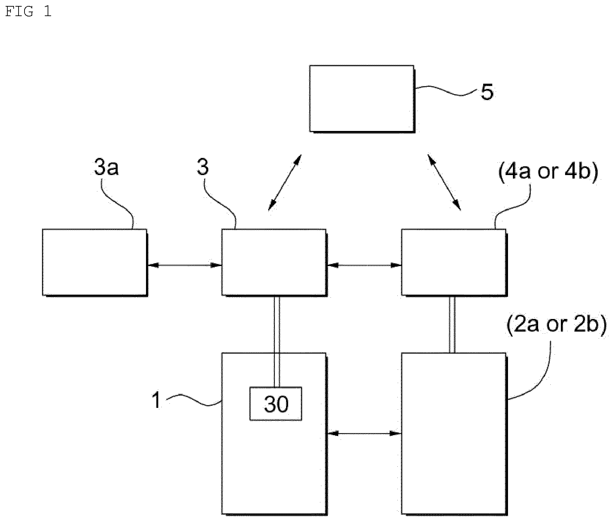

FIG. 1 is a block diagram illustrating a card payment system having a function of identifying a location of use of a card registered in a dedicated application and a location of the dedicated application;

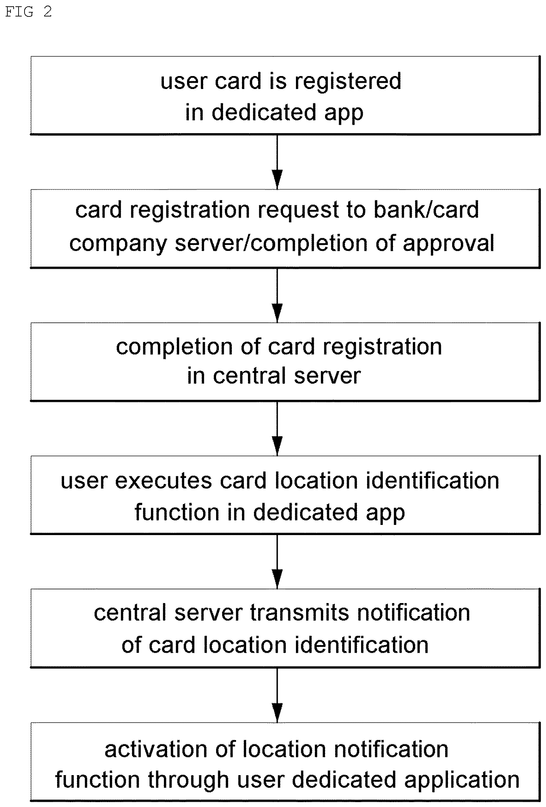

FIG. 2 is a flowchart illustrating activation of card registration and card location identification functions of a card payment method having a function of identifying a location of use of a card registered in a dedicated application and a location of the dedicated application;

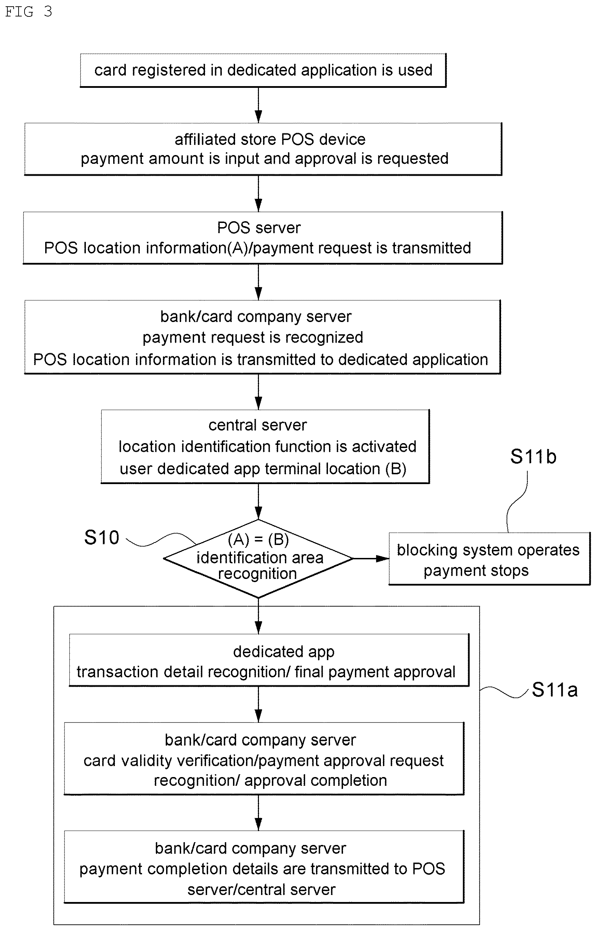

FIG. 3 is a diagram illustrating an example of card use in which a card location identification function is activated, in a card payment method having a function of identifying a location of use of a card registered in a dedicated application and a location of the dedicated application according to a first embodiment;

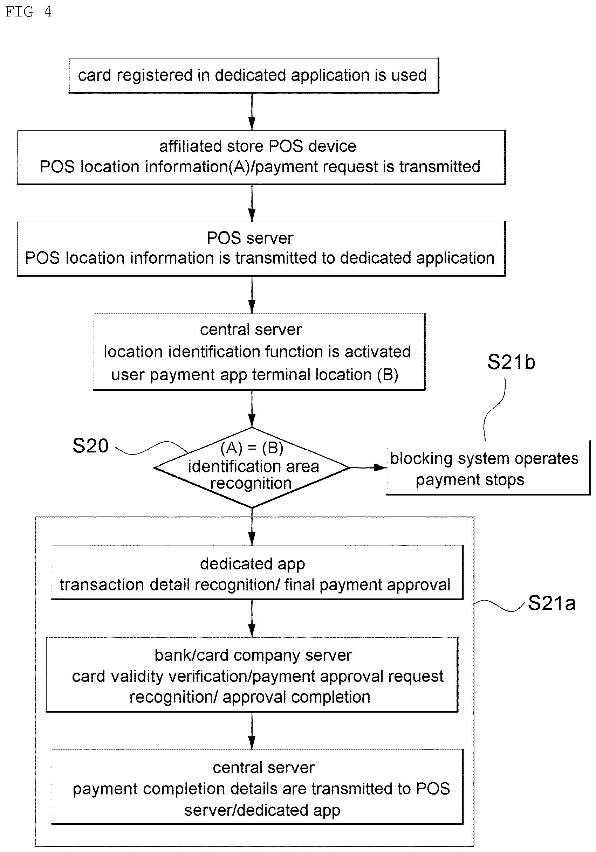

FIG. 4 is a diagram illustrating an example of card use in which a card location identification function is activated, in a card payment method having a function of identifying a location of use of a card registered in a dedicated application and a location of the dedicated application according to a modification of the first embodiment;

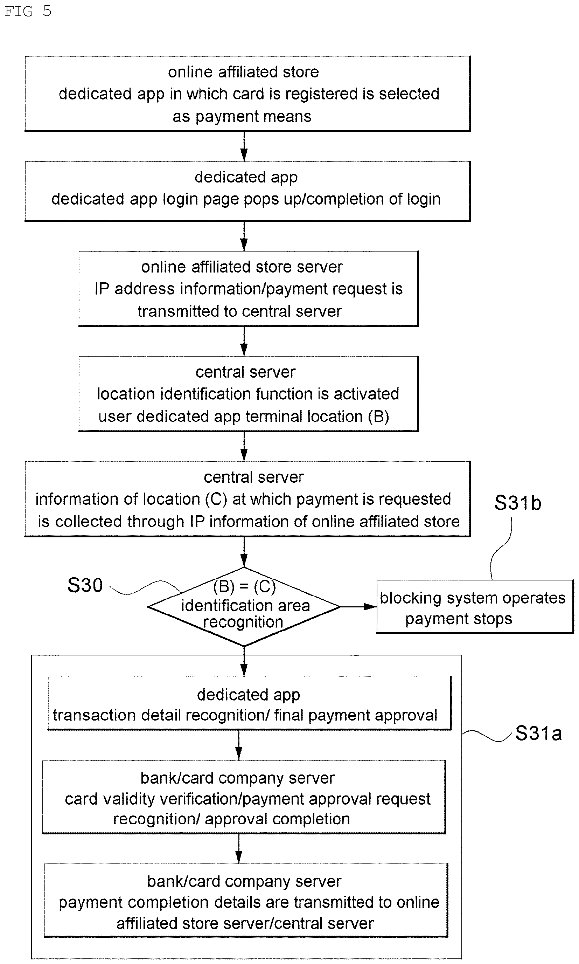

FIG. 5 is a diagram illustrating an example of card use in which a card location identification function is activated, in a card payment method having a function of identifying a location of use of a card registered in a dedicated application and a location of the dedicated application according to a second embodiment;

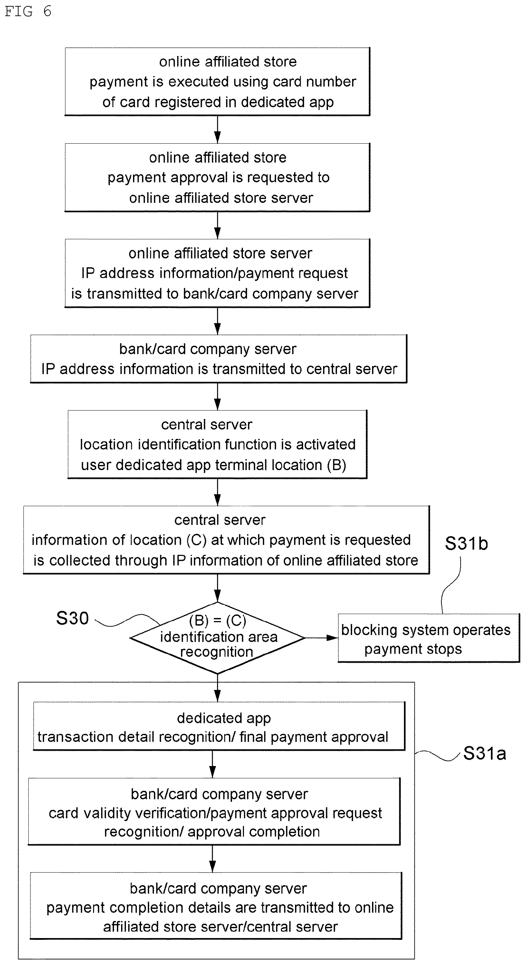

FIG. 6 is a diagram illustrating an example of card use in which a card location identification function is activated in partnership with a bank/card company, in a card payment method having a function of identifying a location of use of a card registered in a dedicated application and a location of the dedicated application according to a modification of the second embodiment;

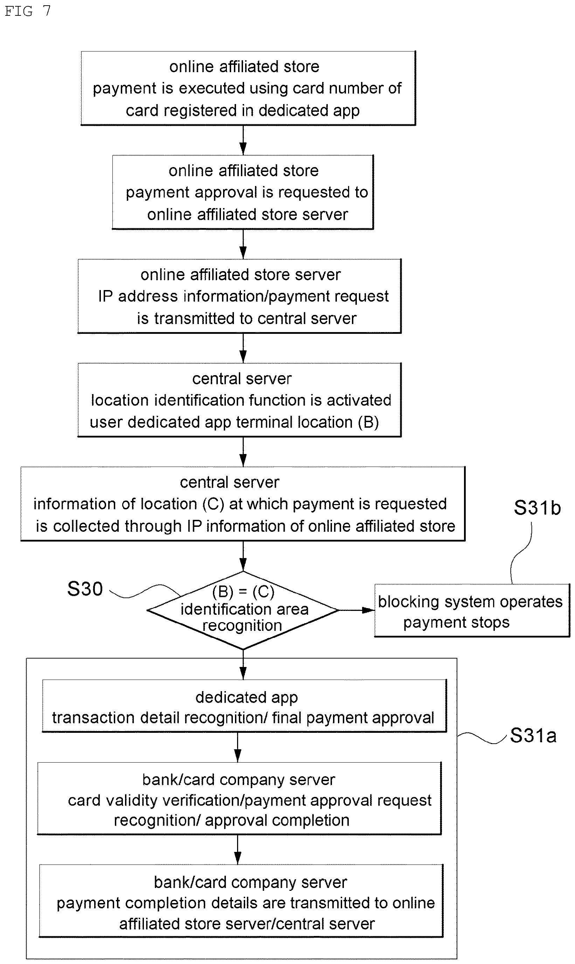

FIG. 7 is a diagram illustrating an example of card use in which a card location identification function is activated in partnership with an online affiliated store, in a card payment method having a function of identifying a location of use of a card registered in a dedicated application and a location of the dedicated application according to a modification of the second embodiment; and

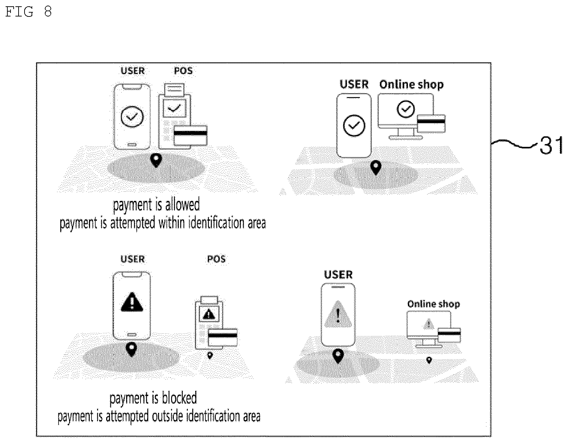

FIG. 8 is a diagram illustrating an example of identification area recognition, in a card payment method having a function of identifying a location of use of a card registered in a dedicated application and a location of the dedicated application.

### DETAILED DESCRIPTION OF THE INVENTION

Hereinbelow, exemplary embodiments of the present disclosure will be described in detail with reference to the accompanying drawings such that the present disclosure can be easily embodied by those skilled in the art to which this present disclosure belongs. However, description of the present disclosure is merely embodiments for structural or functional description, so the scope of the present disclosure should not be construed to be limited to the embodiments described herein. In addition, identical or similar elements will be given the same reference numeral regardless of the reference signs of the drawings, and a redundant description thereof will be omitted.

The technical terms used in the present disclosure are merely used to describe particular embodiments, and are not intended to limit the technical ideas of the present disclosure. In addition, the technical terms used in the present disclosure are to be construed in the sense in which they are generally understood by those skilled in the art, unless otherwise specifically defined in the present disclosure, and are not to be construed in an overly inclusive sense, nor are they to be construed in an overly narrow sense. In addition, a technical term used in the present disclosure is an incorrect technical term that does not accurately express the technical idea of the present disclosure should be replaced by or understood by a technical term that is properly understood by those skilled in the art. In addition, the generic terms used in the present disclosure are to be construed as defined in the dictionary or in accordance with the context, and are not to be construed in an unduly narrowed sense. In addition, in describing the present disclosure, if it is decided that a detailed description of the known art related to the present disclosure makes the subject matter of the present disclosure unclear, the detailed description is omitted.

As shown in FIG. 1, a card payment system having a function of identifying a location of use of a card registered in a dedicated application and a location of the dedicated application according to the present disclosure includes: a user terminal 1, an affiliated store point of sales (POS) device 2a, an online affiliated store 2b, a central server 3, a POS server 4a, an online affiliated store server 4b, a bank/card company server 5, and a dedicated application 30. The user terminal 1 is configured to purchase an object and a service online or offline by a card. The affiliated store POS device 2a is configured to sell the object and the service offline, and forward location information of the affiliated store POS device and a card payment approval request. The online affiliated store 2b is configured to sell the object and the service online through an application and a webpage, and transmit IP address information of the online affiliated store and the card payment approval request. The central server 3 is configured to forward a card payment-related request and approval, and perform identification area recognition 31 for the location information forwarded from the affiliated store POS device or the online affiliated store in which payment is executed by the card, and for location information of the user terminal in which the dedicated application is installed. The POS server 4a is configured to transmit the location information of the POS device and a card payment request to the bank/card company server or the central server. The online affiliated store server 4b is configured to forward the IP address information of the online affiliated store and the card payment request to the bank/card company server or the central server. The bank/card company server 5 is configured to determine whether to approve the card payment approval request from the POS server or the online affiliated store server, and notify the POS server of a response. The dedicated application 30 is configured to provide a card location identification function through the user terminal.

The dedicated application 30 may be installed on the user terminal 1.

A payment application that is the same as or corresponds to the dedicated application may be installed on the affiliated store POS device 2a and in the online affiliated store 2b.

Examples of the card may include actual cards, such as a credit card, a check card, and a debit card, and digital cards registered in an application installed on the terminal for online payment, as well as the user's "mobile phone bill" payment method and "Pay"-type payment linked to the user's bank account.

According to one feature of the present disclosure, provided is a payment method in which the user terminal simply activates card registration and card location identification functions through the dedicated application installed on the user terminal and the central server 3 performs identification area recognition 31 when the registered card is used for payment.

As shown in FIG. 2, regarding the function of identifying the location of use of the card registered in the dedicated application and the location of the dedicated application according to the present disclosure, before the card is used, a process of including the following steps is performed: making a request for registration of the card through the dedicated application installed on the user terminal 1; transmitting the request for registration of the card from the central server 3 to the bank/card company server 5 and approving the request; completing registration of the card in the central server; providing a pop-up notification indicating operation of the card location identification function on the screen of the user terminal, the notification being transmitted from the central server; and activating the card location identification function for the card through the dedicated application. After the card registration and card location identification functions are activated through the dedicated application, the card location identification function may be used. The card location identification function may be turned off according to the user's need and payment may be executed in a general card payment method in which the card location identification function is omitted.

As shown in FIG. 3, according to a first embodiment of the present disclosure, an offline card payment method having a function of identifying a location of use of a card registered in a dedicated application and a location of the dedicated application that is linked to and is in partnership with a bank/card company includes: transmitting a card payment approval request from an affiliated store POS device 2a to a POS server 4a when payment is executed using the card for which a card location identification function is activated; forwarding the card payment approval request from the POS server to the bank/card company server 5 and simultaneously, transmitting information of the card, transaction details, and location information of the affiliated store POS device to the bank/card company server; transmitting the location information of the affiliated store POS device to a central server 3 after the bank/card company server recognizes a payment request; and performing, by the central server, identification area recognition 31 for the location information of the POS device and location information of a user terminal to determine whether to approve payment in step S10.

After the identification area recognition step S10, the method includes: transmitting, when the central server recognizes that the location information of the POS device and the location information of the user terminal exist together in a set identification area, payment approval information of a user to the bank/card company server after transaction detail recognition and final payment request approval are executed through the dedicated application, and performing card validity verification and payment request approval and transmitting a payment completion signal by the bank/card company server to the POS server and the central server to complete card payment in step S11a; or blocking payment when the central server recognizes that the location information of the POS device and the location information of the user terminal do not exist together in the set identification area in step S11b.

Regarding the transmitting of the request for registration of the card from the central server 3 to the bank/card company server 5 and approving the request, by being in partnership with the bank/card company or the POS device or the online affiliated store for the use of the dedicated application, the card is directly registered in the POS server 4a or the online affiliated store server 4b, so that the user can execute payment more quickly.

The location information of the user terminal may include location information of any type of terminal that is running the dedicated application available for payment and E-commerce and is identified through the Global Positioning System (GPS), and may include location information for determining the location of use of the card registered in the dedicated application.

The partnership means that a card is registered in any server and payment is executed through the IP of the server. The targets of partnership are various places, such as a bank/card company, a POS device, and an online affiliated store, for user convenience.

Regarding transaction detail recognition and final payment request approval through the dedicated application, when the central server recognizes that the two pieces of location information exist together in the set identification area, a payment allowance notification is transmitted from the central server to the dedicated application and the notification is recognized and payment is executed through the user terminal.

The final payment request approval may be executed through signature-based authentication performed with an input device, such as a finger or skin, or an electronic pen which are not a terminal; biometric authentication including fingerprint, face, iris, or voice recognition; or password-based authentication with numbers or letters that can be entered with an input device of a terminal. This becomes payment approval information required to complete payment approval by the bank/card company server and the payment approval information may be forwarded to the bank/card company server through the central server. In addition, a payment request method may be pre-stored in the dedicated application to enable quicker approval.

In addition, there is an additional function (referred to as a monitoring function) in the completing of card payment in step S11a. In the monitoring function, the user receives payment request details in person through the dedicated application to increase security, recognizes transaction details, and then final payment request approval is executed using the various approval methods. Similar to the card location identification function, the monitoring function may be turned off according to user convenience for quicker payment execution.

According to a modification of the first embodiment of the present disclosure, as shown in FIG. 4, an offline card payment method having a function of identifying a location of use of a card registered in a dedicated application and a location of the dedicated application that is linked to and is in partnership with a POS device includes: transmitting information of the card and location information of the affiliated store POS device from the affiliated store POS device 2a to the central server 3 when payment is executed using the card for which a card location identification function is activated; and performing, by the central server, identification area recognition 31 for the location information of the POS device and location information of a user terminal to determine whether to approve payment in step S20.

After the identification area recognition step S20, the method includes: transmitting, when the central server recognizes that the location information of the POS device and the location information of the user terminal exist together in the set identification area, payment approval information of a user to a bank/card company server after transaction detail recognition and final payment request approval are executed through the dedicated application, and performing card validity verification and payment request approval and forwarding a payment completion signal by the bank/card company server to the central server and transmitting the payment completion signal from the central server to the POS server and the dedicated application to complete card payment in step S21a; or blocking payment when the central server recognizes that the location information of the POS device and the location information of the user terminal do not exist together in the set identification area in step S21b.

As shown in FIG. 8, in identification area recognition 31, when the user executes payment through the affiliated store POS device by the card registered in the dedicated application, the central server compares the location information of the user terminal on which the dedicated application is installed and the location information of the affiliated store POS device at which the card is used, so that payment within the set identification area is allowed or payment outside the set identification area is blocked.

The range of the identification area may be preset by the central server to a particular range with the user terminal, on which the dedicated application is installed, in the center, or may be set in person by the user through the dedicated application.

According to a second embodiment of the present disclosure, as shown in FIG. 5, an online card payment method in which an online affiliated store having a function of identifying a location of use of a card registered in a dedicated application and a location of the dedicated application selects the dedicated application as a payment means for payment includes: attempting to execute payment at the online affiliated store 2b by selecting, as the payment means, the dedicated application in which the card for a card location identification function is activated is registered; logging into the dedicated application and transmitting IP address information and a payment request from an online affiliated store server 4b to a central server 3; and recognizing and analyzing, through identification area recognition 31 by the central server, location information of a user terminal and location information of a place where online payment is requested in step S30.

After the identification area recognition step S30, the method includes: transmitting, when the central server recognizes that the location information of the user terminal and the location information of the place where online payment is requested exist correctly in the set identification area, payment approval information of a user to the bank/card company server after transaction detail recognition and final payment request approval are executed through the dedicated application, and performing card validity verification and payment request approval and transmitting a payment completion signal by the bank/card company server to the online affiliated store server and the central server to complete card payment in step S31a; or blocking payment when the central server recognizes that the location information of the user terminal and the location information of the place where online payment is requested do not exist in the set identification area in step S31b.

The payment means is an online payment method selected by the online affiliated store accessed through the user terminal, and it may be considered that there are many other payment means in addition to the "dedicated application".

When the dedicated application in which the card for which the card location identification function is activated is registered is selected as a payment means, a dedicated application login window automatically pops up and is displayed on the screen of the user terminal through electronic signals. When dedicated application ID and password are input for login, IP address information and a payment request are automatically transmitted to the central server.

The place where the online payment is requested is determined by recognizing and analyzing Internet protocol (IP) information including the IP address of the online affiliated store. The central server compares the location information of payment by the card registered in the dedicated application and the location information of the place where online payment is requested, so that payment within the set identification area is allowed or payment outside the set identification area is blocked.

In addition, it is recognized and analyzed whether the location information of the place where online payment is requested is a remote place unrelated to the IP address of the online affiliated store, a place completely different from data of a place where payment is normally executed, or an illegal place. When it is determined that the location information of the place is an unsafe place, online payment may be blocked in advance.

According to a modification of the second embodiment of the present disclosure, as shown in FIGS. 2 and 6, an online card payment method in which an online affiliated store having a function of identifying a location of use of a card registered in a dedicated application and a location of the dedicated application that is linked to and is in partnership with a bank/card company inputs a card number for payment includes: attempting to execute payment at the online affiliated store 2b by selecting, as a payment means, input of the card number of the card for which a card location identification function is activated; transmitting a card payment approval request from the online affiliated store to an online affiliated store server 4b; transmitting IP address information and a payment request from the online affiliated store server to a bank/card company server 5; forwarding the IP address information from the bank/card company server to a central server 3; and recognizing and analyzing, through identification area recognition 31 by the central server, location information of a user terminal and location information of a place where online payment is requested in step S30.

As in the second embodiment, after the identification area recognition step S30, the method includes: transmitting, when the central server recognizes that the two pieces of location information exist correctly in a set identification area, payment approval information of a user to the bank/card company server after transaction detail recognition and final payment request approval are executed through the dedicated application, and performing card validity verification and payment request approval and transmitting a payment completion signal by the bank/card company server to the online affiliated store server and the central server to complete card payment in step S31a; or blocking payment when the central server recognizes that the two pieces of location information do not exist in the set identification area in step S31b.

In addition, as shown in FIGS. 2 and 7, according to a modification of the second embodiment in which link to and partnership with an online affiliated store rather than a bank/card company are established, the transmitting of the IP address information and the payment request from the online affiliated store server to the bank/card company server 5 in the online card payment method in which the online affiliated store having the function of identifying the location of use of the card registered in the dedicated application and the location of the dedicated application that is linked to and is in partnership with the bank/card company inputs the card number for payment is converted into transmitting the IP address information and the payment request from the online affiliated store server to the central server 3, and the forwarding of the IP address information from the bank/card company server to the central server 3 is excluded, and the remaining steps are the same.

Regarding the card location identification function, the central server determines whether the location identification function for the card of a payer is activated before the location information of the user terminal on which the dedicated application is installed and the location information of the affiliated store POS device or the online affiliated store at which payment is executed by the card are collected through a location tracking-based system. When the location identification function is activated, the location information of the user terminal and the location information of the affiliated store POS device or the online affiliated store are collected.

In addition, the card location identification function is described as a function in which the location information of any type of terminal that is capable of running the dedicated application and being identified through GPS; the location of the dedicated application and the location of use of the card registered in the dedicated application; the location information of the affiliated store POS device at which payment is executed by the registered card; or the location information of the IP address of the online affiliated store and the place at which online payment is requested are forwarded to the central server 3, and then the central server performs analyzing of the location information and identification area recognition 31. However, no limitation thereto is imposed. As shown in FIG. 1, through a separate location identification system server 3a connected to the central server 3, the card is registered and communication for the location information is performed, and the location identification system server performs analyzing of the location information and identification area recognition 31 and performs most of the card location identification function, and the central server is allowed to perform only the remaining function of forwarding a card payment-related request and approval.

All processes of the card payment method having the function of identifying the location of use of the card registered in the dedicated application and the location of the dedicated application may be easily viewed through the user terminal, and controlling, such as turning on or off the location identification function or the monitoring function, is possible according to user convenience.

According to the above-described card payment blocking system and method using the card location identification function of the dedicated application, a user simply activates the card location identification function through the dedicated application installed on his or her terminal and a structure capable of location identification is thus created for a credit card having no location identification function, which is not a smartphone or a device capable of recognizing location by GPS, so that online or offline location of use of a card can be easily recognized with little effort and card security can be strengthened.

According to the above-described card payment blocking system and method using the card location identification function of the dedicated application, illegal use of a card that a user has lost or that has been stolen and payment information of a user online can be fundamentally blocked.

The embodiments of the present disclosure are realized not only through the above-described apparatus and/or operation method, but also a program or a recording medium on which the program is recorded, the program for realizing the functions corresponding to the configurations of the embodiments of the present disclosure. Such realization can be easily made by a person skilled in the art to which the present disclosure pertains, from the above-described embodiments. Although the preferred embodiments of the present disclosure have been described for illustrative purposes, those skilled in the art will appreciate that various modifications, additions, and substitutions are possible, without departing from the scope of the accompanying claims.

## Claims

1. A card payment system having a function of identifying a location of use of a card registered in a dedicated application and a location of the dedicated application, the system comprising:
a user terminal (1) configured to purchase an object and a service online or offline by the card;
an affiliated store POS device (2a) configured to sell the object and the service offline, and forward location information of the affiliated store POS device and a card payment approval request;
an online affiliated store (2b) configured to sell the object and the service online through an application and a webpage, and transmit IP address information of the online affiliated store and the card payment approval request;
a central server (3) configured to forward a card payment-related request and approval, and perform identification area recognition (31) for the location information forwarded from the affiliated store POS device or the online affiliated store in which payment is executed by the card and for location information of the user terminal on which the dedicated application is installed;
a POS server (4a) configured to transmit the location information of the POS device and a card payment request to a bank/card company server or the central server;
an online affiliated store server (4b) configured to forward the IP address information of the online affiliated store and the card payment request to the bank/card company server or the central server;
the bank/card company server (5) configured to determine whether to approve the card payment approval request from the POS server or the online affiliated store server, and notify the POS server of a response; and
the dedicated application (30) configured to provide a card location identification function through the user terminal.

2. A card payment method having a function of identifying a location of use of a card registered in a dedicated application and a location of the dedicated application, the method comprising:
transmitting a card payment approval request from an affiliated store POS device (2a) to a POS server (4a) when payment is executed using the card for which a card location identification function is activated;
forwarding the card payment approval request from the POS server to a bank/card company server (5) and simultaneously, transmitting information of the card, transaction details, and location information of the affiliated store POS device to the bank/card company server;
transmitting the location information of the affiliated store POS device to a central server (3) after the bank/card company server recognizes a payment request; and
performing, by the central server, identification area recognition (31) for the location information of the POS device and location information of a user terminal to determine whether to approve payment,
wherein after the performing, by the central server, of identification area recognition for the location information of the POS device and the location information of the user terminal to determine whether to approve payment, the method comprises
transmitting, when the central server recognizes that the two pieces of location information exist together in a set identification area, payment approval information of a user to the bank/card company server after transaction detail recognition and final payment request approval are executed through the dedicated application, and performing card validity verification and payment request approval and transmitting a payment completion signal by the bank/card company server to the POS server and the central server to complete card payment; or
blocking payment when the central server recognizes that the two pieces of location information do not exist together in the set identification area.

3. A card payment method having a function of identifying a location of use of a card registered in a dedicated application and a location of the dedicated application, the method comprising:
transmitting information of the card and location information of an affiliated store POS device (2a) from the affiliated store POS device to a central server (3) when payment is executed using the card for which a card location identification function is activated; and
performing, by the central server, identification area recognition (31) for the location information of the POS device and location information of a user terminal to determine whether to approve payment,
wherein after the performing, by the central server, of identification area recognition for the location information of the POS device and the location information of the user terminal to determine whether to approve payment, the method comprises
transmitting, when the central server recognizes that the two pieces of location information exist together in a set identification area, payment approval information of a user to a bank/card company server after transaction detail recognition and final payment request approval are executed through the dedicated application, and performing card validity verification and payment request approval and forwarding a payment completion signal by the bank/card company server to the central server and transmitting the payment completion signal from the central server to the POS server and the dedicated application to complete card payment; or
blocking payment when the central server recognizes that the two pieces of location information do not exist together in the set identification area.

4. A card payment method having a function of identifying a location of use of a card registered in a dedicated application and a location of the dedicated application, the method comprising:
attempting to execute payment at an online affiliated store (2b) by selecting, as a payment means, the dedicated application in which the card for which a card location identification function is activated is registered;
logging into the dedicated application and transmitting IP address information and a payment request from an online affiliated store server (4b) to a central server (3); and
recognizing and analyzing, through identification area recognition (31) by the central server, location information of a user terminal and location information of a place where online payment is requested,
wherein after the recognizing and analyzing of, through identification area recognition by the central server, the location information of the user terminal and the location information of the place where online payment is requested, the method comprises
transmitting, when the central server recognizes that the two pieces of location information exist correctly in a set identification area, payment approval information of a user to a bank/card company server after transaction detail recognition and final payment request approval are executed through the dedicated application, and performing card validity verification and payment request approval and transmitting a payment completion signal by the bank/card company server to the online affiliated store server and the central server to complete card payment; or
blocking payment when the central server recognizes that the two pieces of location information do not exist in the set identification area.

5. A card payment method having a function of identifying a location of use of a card registered in a dedicated application and a location of the dedicated application, the method comprising:
attempting to execute payment at an online affiliated store (2b) by selecting, as a payment means, input of a card number of the card for which a card location identification function is activated;
transmitting a card payment approval request from the online affiliated store to an online affiliated store server (4b);
transmitting IP address information and a payment request from the online affiliated store server (4b) to a bank/card company server (5) ;
forwarding the IP address information from the bank/card company server to a central server (3); and
recognizing and analyzing, through identification area recognition (31) by the central server, location information of a user terminal and location information of a place where online payment is requested,
wherein after the recognizing and analyzing of, through identification area recognition by the central server, the location information of the user terminal and the location information of the place where online payment is requested, the method comprises
transmitting, when the central server recognizes that the two pieces of location information exist correctly in a set identification area, payment approval information of a user to the bank/card company server after transaction detail recognition and final payment request approval are executed through the dedicated application, and performing card validity verification and payment request approval and transmitting a payment completion signal by the bank/card company server to the online affiliated store server and the central server to complete card payment; or
blocking payment when the central server recognizes that the two pieces of location information do not exist in the set identification area.

6. The method of claim 5, wherein in an online card payment manner in which the online affiliated store having the function of identifying the location of use of the card registered in the dedicated application and the location of the dedicated application that is linked to and is in partnership with the online affiliated store rather than a bank/card company inputs the card number for payment,
the transmitting of the IP address information and the payment request from the online affiliated store server to the bank/card company server in an online card payment manner in which the online affiliated store having the function of identifying the location of use of the card registered in the dedicated application and the location of the dedicated application that is linked to and is in partnership with the bank/card company inputs the card number for payment is converted into transmitting the IP address information and the payment request from the online affiliated store server to the central server, and
the forwarding of the IP address information from the bank/card company server to the central server is excluded, and the remaining steps are the same.

7. The method of any one of claims 2 to 6, wherein the card location identification function is performed through the steps of:
making a request for registration of the card through the dedicated application installed on the user terminal;
transmitting the request for registration of the card from the central server to the bank/card company server and approving the request;
completing registration of the card in the central server;
providing a pop-up notification indicating operation of the card location identification function on a screen of the user terminal, the notification being transmitted from the central server; and
activating the card location identification function for the card through the dedicated application.

8. The method of any one of claims 2 to 6, wherein the location information of the user terminal includes location information of any type of terminal that is identified through GPS and is running the dedicated application available for payment and E-commerce, and includes location information for determining the location of use of the card registered in the dedicated application.

9. The method of any one of claims 2 to 6, wherein in identification area recognition (31), when payment is executed through the affiliated store POS device by the card registered in the dedicated application, the central server compares the location information of the user terminal on which the dedicated application is installed and the location information of the affiliated store POS device at which the card is used or the place where online payment is requested, so that payment within the set identification area is allowed or payment outside the set identification area is blocked, or
when online payment is executed by the card registered in the dedicated application, the central server compares the location information of payment by the card registered in the dedicated application and the location information of the place where online payment by the card is requested, so that payment within the set identification area is allowed or payment outside the set identification area is blocked.

10. The method of any one of claims 2 to 6, wherein payment is able to be blocked when the central server recognizes that the location information of the place where online payment is requested is a place unrelated to an IP address of the online affiliated store or an illegal place and determines that the location information of the place where online payment is requested is an unsafe place.

11. The method of any one of claims 2 to 6, wherein the card location identification function and a monitoring function are able to be turned off, wherein in the monitoring function, payment request details are received through the dedicated application, transaction detail recognition is performed, and then final payment request approval is executed using various approval methods.

12. The method of claims 1, the central server (3) is, wherein through a separate location identification system server (3a) connected to a central server, the card is registered and communication for the location information is performed, and the location identification system server (3a) performs analyzing of the location information and identification area recognition (31) and performs most of the card location identification function, and the central server is allowed to perform only the remaining function of forwarding a card payment-related request and approval.
